# EUROPÄISCHE PATENTSCHRIFT

(11) **EP 0 746 510 B1**
(45) Veröffentlichungstag und Bekanntmachung des Hinweises auf die Patenterteilung: **20.08.1997**
(21) Anmeldenummer: 95910401.9
(22) Anmeldetag: 13.02.1995
(51) Int. Cl.: B65D 43/06, A47J 47/18

(54) **SPRITZGEGOSSENER EINRAND-KUNSTSTOFFBEHÄLTER MIT EINRASTBAREM DECKEL**
INJECTION-MOULDED SINGLE-EDGE PLASTIC CONTAINER WITH A SNAP-ON LID
RECIPIENT EN PLASTIQUE MOULE PAR INJECTION A BORD UNIQUE ET DOTE D'UN COUVERCLE ENCLIQUETABLE

(30) Priorität: 25.02.1994 DE 9403122 U; 28.06.1994 DE 4422534
(43) Veröffentlichungstag der Anmeldung: 11.12.1996
(73) Patentinhaber: Jokey Plastik Wipperfürth GmbH, D-51688 Wipperfürth (DE)
(72) Erfinder: KEMMERICH, Herbert, D-51688 Wipperfürth (DE)
(74) Vertreter: Patentanwälte Lippert, Stachow, Schmidt & Partner
(86) Internationale Anmeldenummer: DE9500202
(87) Internationale Veröffentlichungsnummer: WO9523096

(56) Entgegenhaltungen:
- EP-A- 0 215 756
- EP-A- 0 613 830
- DE-U- 9 112 544
- FR-A- 2 176 796
- FR-A- 2 463 063
- US-A- 4 234 100

## Beschreibung

Die Erfindung betrifft einen spritzgegossenen Einrand-Kunststoffbehälter mit einrastbarem Deckel mit einem oberen Rand zur rastenden Aufnahme des Deckels und einem auf der Außenseite seiner Wand befindlichen hervorstehenden umlaufenden Rand, der in einen die Wand im Abstand umgebenden heruntergezogenen Randbereich übergeht, wobei der Deckel einen etwa senkrecht angeordneten äußeren Bereich aufweist, der im eingerasteten Zustand des Deckels die Wand oberhalb des hervorstehenden Randes umgibt der eine nach außen weisende Abgleitschräge aufweist und der mit einer Innenfläche versehen ist, die sich im eingerasteten Zustand des Deckels unterhalb des oberen Randes des Kunststoffbehälters befindet.

Solche Kunststoffbehälter werden zur Aufbewahrung und für den Transport beliebiger Güter verwendet, wobei je nach der Größe des Kunststoffbehälters und der Art des im Kunststoffbehälter befindlichen Gutes ein erhebliches Gewicht erreicht werden kann. Die nachfolgend verwendeten Begriffe "oben" oder "unten" beziehen sich jeweils auf die normale Gebrauchslage des mit einem Deckel verschlossenen Kunststoffbehälters.

Werden nun derartige gefüllte Kunststoffbehälter zum Zwecke des Transportes beispielsweise auf Paletten übereinander gestapelt, so können die Deckel der jeweils unteren Kunststoffbehälter nach außen aufgehebelt werden. Die Folge ist ein lose sitzender Deckel, der dann unter Umständen sogar verloren gehen kann, oder er weist zumindest einen Bereich auf, in dem der untere Deckelrand verbogen ist.

Außerdem kann der heruntergezogene Randbereich oder der umlaufende Rand eines Kunststoffbehälters auf den umlaufenden Rand oder den heruntergezogenen Randbereich des Deckels eines benachbarten Kunststoffbehälters aufsetzen und dort Beschädigungen hervorrufen, oder es wird der untere heruntergezogene Randbereich desjenigen Kunststoffbehälters beschädigt, der auf den benachbarten aufgesetzt hat. Des weiteren kann der Kunststoffbehälter, welcher auf einen benachbarten Kunststoffbehälter aufgesetzt hat, längere Zeit in der erreichten schiefen Lage verbleiben, so daß dessen Seitenwand infolge des Gewichts des in ihm befindlichen Gutes einknicken kann. Derartige Transportschäden sind jedoch äußerst unerwünscht.

Ein weiterer Nachteil der bekannten Deckel ist darin zu sehen, daß diese in dem Fall, wenn sie unmittelbar übereinandergestapelt werden, aneinander verkeilen können und somit das Entstapeln erschweren.

Aus der FR-A-2463063 ist ein Behälter mit einem Deckel bekannt geworden, bei dem der untere Deckelrand gegen zufälliges Öffnen weitgehend gesichert ist. Zu diesem Zweck ist in einem Abstand unterhalb des unteren Deckelrandes ein die äußere Wand des Behälters umgebender hervorstehender Rand vorgesehen. Die Breite dieses hervorstehenden Randes entspricht etwa dem Abstand des unteren Randes von der Wand des Behälters.

Auf diese Weise kann ein zufälliges Öffnen des Deckels vermieden werden, da der untere Deckelrand mit dem oberen Rand des Deckels eines benachbarten Behälters nicht in Kontakt kommen kann. Diese Gefahr entsteht aber, wenn der äußere Rand des Deckels infolge einer erheblichen Gewichtsbelastung aufgespreizt wird, wie dies beim Stapeln gefüllter Behälter der Fall ist.

Dieser Aufspreizvorgang wird durch die umlaufende Sicke in der Deckelinnenfläche, die zur Aufnahme des unteren Behälterrandes eines auf den Deckel zu stapelnden weiteren Behälters vorgesehen ist, nicht verhindert.

Weiterhin wird in der US-A-4234100 ein Deckel für einen Behälter beschrieben, der beim Verschließen des Behälters für eine gute Luftableitung sorgen soll. Außerdem soll dieser Deckel das Stapeln gefüllter Behälter ermöglichen. Hierzu sind auf der Deckelinnenfläche mit Vertiefungen zur Aufnahme des unteren Behälterrandes versehene Blöcke vorgesehen. Unterhalb des Deckels stehen aus diesem radiale Rippen, die die Deckelinnenfläche verstärken, hervor. Dadurch wird eine insgesamt erhöhte Steifigkeit des Deckels erreicht, die den Öffnungsvorgang erheblich erschwert. Ein zufälliges Öffnen des Deckels durch zufälliges Verhaken des äußeren Deckelrandes mit anderen Behältern kann jedoch mit dieser Lösung nicht verhindert werden.

Der Erfindung liegt deshalb die Aufgabe zugrunde, einen spritzgegossenen Einrand-Kunststoffbehälter mit einrastbarem Deckel zu schaffen, der eine verbesserte Belastbarkeit der Deckel beim Übereinanderstapeln der Kunststoffbehälter aufweist, wobei der Stapelvorgang wesentlich verbessert werden soll, und bei dem eine Beschädigung des Randbereiches eines Behälters durch benachbarte Kunststoffbehälter beim Stapeln oder beim Transport, beispielsweise in Paletten, zuverlässig verhindert wird.

Die der Erfindung zugrundeliegende Aufgabe wird bei einem spritzgegossenen Einrand-Kunststoffbehälter mit einrastbarem Deckel der eingangs genannten Art dadurch gelöst, daß die die Deckelinnenfläche umgebende Deckelinnenseite mit einer umlaufenden Verstärkungssicke versehen ist, die eine Vielzahl einwärts gerichtete quaderförmige Vorsprünge aufweist, welche die Innenfläche mit der Deckelinnenseite verbinden. Der heruntergezogene Randbereich ist mit einer umlaufenden Einschnürung zur Aufnahme des unteren Deckelrandes versehen.

Durch diese Lösung wird eine wesentlich verbesserte Belastbarkeit beim Überseinanderstapeln der Kunststoffbehälter erreicht. Die Ausbildung der die Innenfläche mit dem herabgezogenen Teil des Deckels verbindenden Vorsprünge führt zu einer wesentlichen Erhöhung der Steifigkeit des Deckels in diesem Bereich, ohne daß das Abziehen des Deckels vom Kunststoffbehälter erschwert wird. Durch die Abgleitschräge wird einerseits eine weitere Erhöhung der Stabilität des Deckels gegen Aufspreizen durch eine vertikale Belastung beim Stapeln erreicht und andererseits der Stapelvorgang erleichtert, da sich benachbarte Kunststoffbehälter nicht aneinander verhaken können.

Um eine ausreichende Standsicherheit beim Stapeln der Kunststoffbehälter zu erreichen, ist es zweckmäßig, wenn die einwärts gerichteten Vorsprünge eine Fläche umschließen, die mindestens der Bodenaufstandsfläche des Kunststoffbehälters entspricht. Außerdem erleichtern die einwärts gerichteter. Vorsprünge das Zentrieren der Behälter beim Stapelvorgang ganz erheblich.

Eine besonders gleichmäßige Verstärkung des Deckelumfanges wird dadurch erreicht, wenn die Abstände zwischen den Vorsprüngen der Breite der Vorsprünge entsprechen und die Deckelunterseite mit nach außen weisenden Vorsprüngen versehen ist, deren Form den Vorsprüngen auf der Innenfläche des Deckels entspricht.

Eine weitere vorteilhafte Ausgestaltung der Erfindung ist dadurch gekennzeichnet, daß die auf der Deckelunterseite befindlichen Vorsprünge eine Fläche einschließen, die etwa der Fläche entspricht, die der innere obere Deckelrand einschließt. Damit besteht die Möglichkeit, die Deckel nahezu spielfrei übereinanderzustapeln.

Um beim Stapeln der Deckel ein Verklemmen zu vermeiden, ist die Deckelinnenseite auf ihrer Unterseite mit einer hervorspringenden umlaufenden Stützkante zur Aufnahme des inneren oberen Deckelrandes eines weiteren Deckels versehen.

Eine weitere Ausgestaltung der Erfindung ist dadurch gekennzeichnet, daß die Tiefe der Einschnürung etwa der Dicke des unteren Deckelrandes entspricht. Es ist weiterhin zweckmäßig, daß die Höhe der Einschnürung wesentlich größer ist als die Dicke des unteren Deckelrandes. Durch diese Ausgestaltung der Erfindung wird erreicht, daß es beim Stapeln der Kunststoffbehälter nicht zu einem unbeabsichtigten Eindrücken des Deckelrandes kommt und die Kunststoffbehälter aneinander abgleiten.

Eine besonders stabile Befestigung des Deckels wird erreicht, wenn der untere Deckelrand auf der Oberseite der Einschnürung unter Vorspannung auf liegt, wodurch außerdem eine Umgehung eines eventuell vorhandenen Originalitätsverschlusses verhindert wird.

Es ist weiterhin von Vorteil, wenn die Abgleitschräge mit einem umlaufenden, nach außen weisenden, nasenförmigen Vorsprung versehen ist.

Durch diese insbesondere bei runden Kunststoffbehältern zweckmäßige zusätzliche Maßnahme wird beim Stapeln und beim Transport sicher verhindert, daß ein Kunststoffbehälter auf dem umlaufenden Rand eines benachbarten Kunststoffbehälters aufsetzen kann und sich eventuell dort verhakt. Durch die Abgleitschräge in Verbindung mit der umlaufenden Nase wird eine zusätzliche Möglichkeit geschaffen, daß die Kunststoffbehälter voneinander abgleiten und anschließend wieder ihre normale Lage einnehmen können.

Außerdem wird durch die erfindungsgemäße Ausgestaltung des, Deckels mit dem nasenförmigen Vorsprung eine besonders einfache Entstapelung bzw. Vereinzelung aus einem Stapel übereinandergestapelter Deckel ermöglicht. Durch den nasenförmigen Vorsprung kann ein Greifer eines Entstaplers besonders problemlos einzelne Deckel seitlich untergreifen und nacheinanderfolgend nach unten freigeben.

Für die praktische Ausübung der Erfindung ist es unerheblich, ob die Kunststoffbehälter rund, oval oder eckig ausgebildet sind, da die einzelnen Merkmale der Erfindung lediglich in entsprechender Weise an die äußere Gestalt des jeweiligen Kunststoffbehälters anzupassen sind.

Die Erfindung soll nachstehend anhand eines Ausführungsbeispieles näher erläutert werden. In den zugehörigen Zeichnungen zeigen:
- Fig. 1: eine Draufsicht auf den Deckel eines spritzgegossenen Kunststoffeimers;
- Fig. 2: einen vergrößerten Querschnitt entlang der Linie I-I von Fig. 1;
- Fig. 3: einen vergrößerten Querschnitt entlang der Linie II-II von Fig. 1;
- Fig. 4: zwei im Ausschnitt dargestellte Kunststoffbehälter mit eingerastetem Deckel während des Abgleitvorganges voneinander, beispielsweise beim Beladen einer Palette;
- Fig. 5: zwei im Ausschnitt dargestellte Kunststoffbehälter beim Abgleitvorgang im Bereich eines Originalitätsverschlusses.

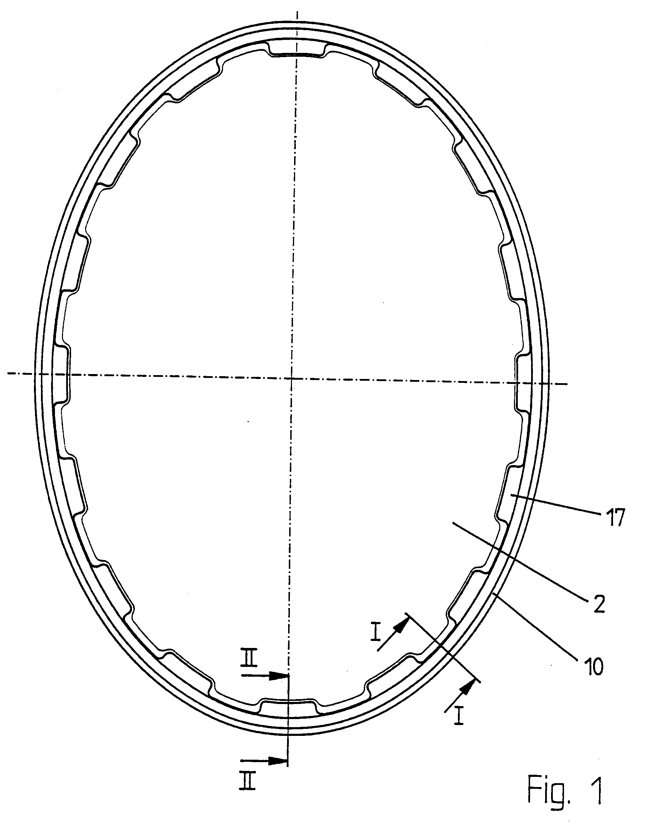

Entsprechend Fig. 1 bis 3 ist der Kunststoffbehälter 1 mit einem Deckel 2 verschlossen, indem der Deckel 2 am oberen Rand 3 der Wand 4 des Kunststoffbehälters 1 an einer Schnappkante 5 rastend befestigt ist. Zu diesem Zweck ist der äußere Bereich 6 des Deckels 2 auf seiner Innenseite auf bekannte Weise mit einer umlaufenden Rastkante 7 versehen. Der Kunststoffbehälter 1 ist weiterhin auf der Außenseite der Wand 4 mit einem umlaufenden Rand 8 ausgestattet, der in einen heruntergezogenen Randbereich 9 übergeht und die Wand 4 des Kunststoffbehälters 1 in einem Abstand umgibt.

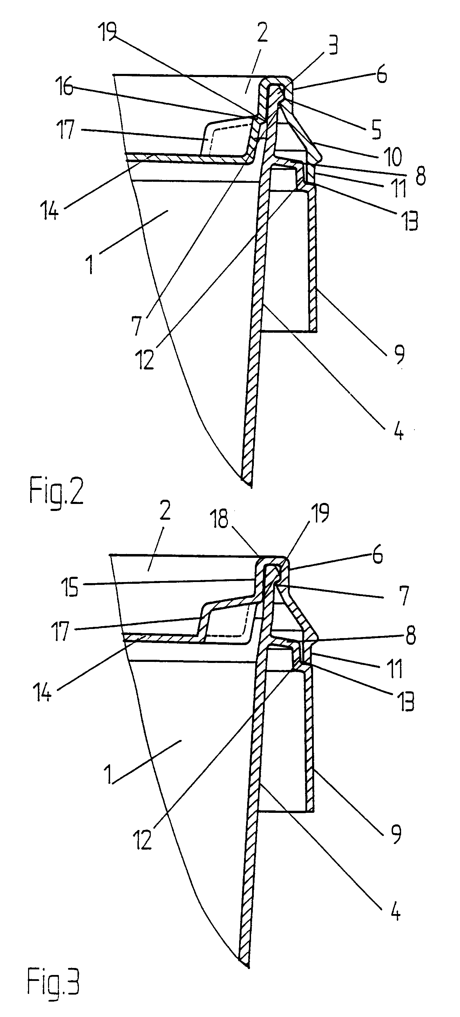

Wie aus den Fig. 2 und 3 ersichtlich, umgibt der äußere Bereich 6 des Deckels 2 die am oberen Rand 3 der Wand 4 befindliche Schnappkante 5. An diesen äußeren Bereich 6 schließt sich eine nach außen weisende Abgleitschräge 10 an, die anschließend in einen etwa senkrecht verlaufenden herabgezogenen Teil 11 des Deckels 2 übergeht.

Um beim Verschließen des Kunststoffbehälters 1 einen guten Verbund zum Deckel 2 zu erreichen, ist der heruntergezogene Randbereich 9 mit einer Einschürung 12 zur Aufnahme des unteren Deckelrandes 13 versehen, deren Tiefe etwa der Dicke des unteren Deckelrandes 13 entsprechen sollte. Außerdem sollte die Höhe der Einschnürung 12 wesentlich größer sein als die Dicke des unteren Deckelrandes 13. Dadurch wird erreicht, daß es beim Stapeln der Kunststoffbehälter 1 nicht zu einem unbeabsichtigten Eindrücken des Deckelrandes 13 kommt und die Kunststoffbehälter 1 gut aneinander abgleiten können.

Eine besonders stabile Befestigung des Deckels 2 wird erreicht, wenn der untere Deckelrand 13 auf der Oberseite der Einschnürung 12 unter Vorspannung aufliegt, wodurch außerdem eine Umgehung eines eventuell vorhandenen Originalitätsverschlusses verhindert werden kann.

Entsprechend den Fig. 1 bis 3 weist der Deckel 2 eine Innenfläche 14 auf, die sich im eingerasteten Zustand des Deckels 2 unterhalb des oberen Randes 3 des Kunststoffbehälters 1 befindet. Weiterhin ist die Deckelinnenseite 15 mit einer umlaufenden Verstärkungssicke 16 versehen, die eine Vielzahl einwärts gerichteter quaderförmiger Vorsprünge 17 aufweist, welche die Innenfläche 14 des Deckels 2 mit der Deckelinnenseite 15 verbinden. Die einwärts gerichteten Vorsprünge 17 umschließen eine Fläche, die mindestens der Bodenaufstandsfläche des Kunststoffbehälters 1 entspricht. Um eine über den Umfang des Deckels 2 gleichmäßig verteilte Verstärkungswirkung durch die Vorsprünge 17 zu erreichen, entsprechen die Abstände zwischen den Vorsprüngen 17 deren Breite.

Außerdem ist die Deckelunterseite mit nach außen weisenden Vorsprüngen versehen, deren Form den Vorsprüngen 17 auf der Deckeloberseite entspricht, wobei diese eine Fläche einschließen, die etwa der Fläche entspricht, die der innere obere Deckelrand 18 einschließt.

Weiterhin ist die Deckelinnenseite 15 auf ihrer Unterseite gegenüber der Verstärkungssicke 16 mit einer hervorspringenden umlaufenden Stützkante 19 zur Aufnahme des oberen inneren Deckelrandes 18 eines weiteren Deckels versehen, so daß beim Stapeln der Deckel 2 kein Verklemmen auftreten kann.

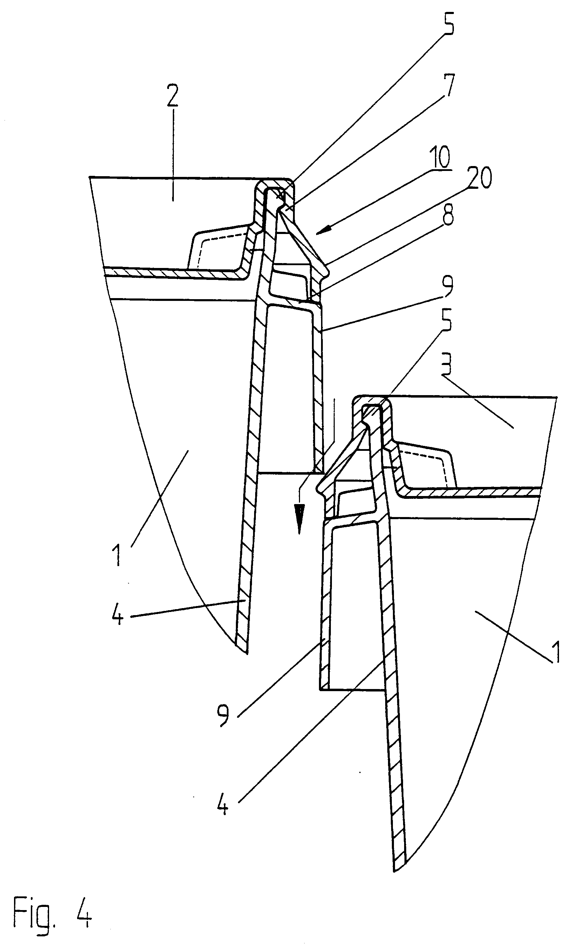

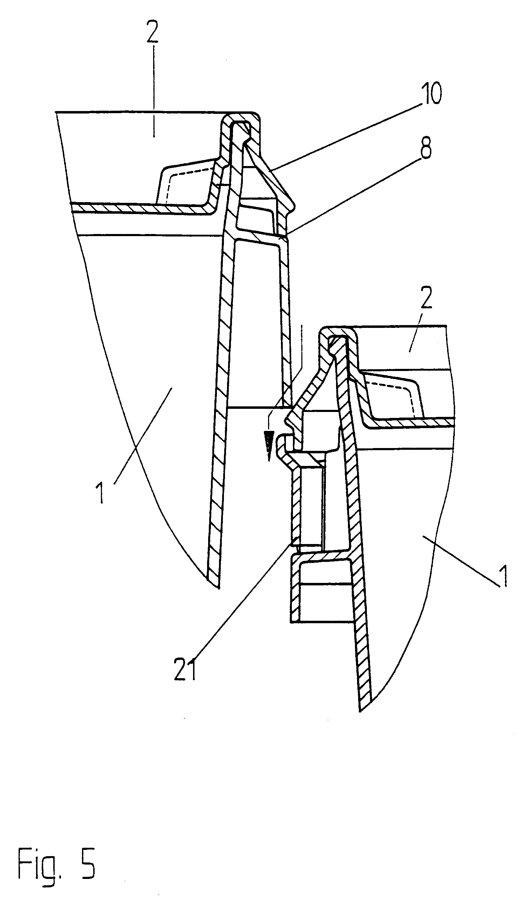

In Fig. 4 und 5 ist eine Situation während des Abgleitvorganges von zwei Kunststoffbehältern 1 dargestellt, wobei zwischen der Abgleitschräge 10 und dem herabgezogenen Teil 11 des Deckels 2 zusätzlich ein umlaufender nasenförmiger Vorsprung 20 vorgesehen ist, der den Abgleitvorgang weiter verbessert. Die aus Fig. 5 ersichtliche Situation entspricht der in Fig. 4, wobei hier der Abgleitvorgang im Bereich eines Originalitätsverschlusses 21 dargestellt ist.

Durch den Vorsprung 20 wird beim Stapeln und beim Transport der Kunststoffbehälter 1 zusätzlich ausgeschlossen, daß ein Kunststoffbehälter 1 auf dem umlaufenden Rand 8 eines benachbarten Kunststoffbehälters 1 aufsetzen kann und sich eventuell dort verhakt. Durch die Abgleitschräge 10 in Verbindung mit dem nasenförmigen Vorsprung 20 wird erreicht, daß die Kunststoffbehälter 1 voneinander abgleiten und dabei wieder ihre normale Lage einnehmen können. Dadurch werden sonst mögliche Beschädigungen des umlaufenden Randes 8 sicher vermieden. Da die Kunststoffbehälter 1 infolge der Abgleitschräge 10 beim Stapeln oder beim Transport auf Paletten o. dgl. bestenfalls nur kurzzeitig schiefstehen und aneinander gut abgleiten, wird die Gefahr, daß einer der Kunststoffbehälter infolge der Gewichtsbelastung einknickt, fast vollständig ausgeschlossen.

## Patentansprüche

1. Spritzgegossener Einrand-Kunststoffbehälter (1) mit einrastbarem Deckel (2), mit einem oberen Rand (3) zur rastenden Aufnahme des Deckels (2) und einem auf der Außenseite seiner Wand (4) befindlichen, hervorstehenden, umlaufenden Rand (8), der in einen die Wand (4) im Abstand umgebenden, heruntergezogenen Randbereich (9) übergeht, wobei der Deckel (2) einen etwa senkrecht angeordneten, äußeren Bereich aufweist, der im eingerasteten Zustand die Wand (4) oberhalb des hervorstehenden Randes (8) umgibt, der eine nach außen weisende Abgleitschräge (10) aufweist und mit einer Innenfläche (14) versehen ist, die sich im eingerasteten Zustand des Deckels (2) unterhalb des oberen Randes (3) des Kunststoffbehälters (1) befindet, **dadurch gekennzeichnet,**
daß die die Deckelinnenfläche (14) umgebende Deckelinnenseite (15) mit einer umlaufenden Verstärkungssicke (16) versehen ist,
daß die Verstärkungssicke (16) eine Vielzahl einwärts gerichtete, quaderförmige Vorsprünge (17) aufweist, welche die Innenfläche (14) mit der Deckelinnenseite (15) verbinden, und
daß der heruntergezogene Randbereich (9) mit einer umlaufenden Einschnürung (12) zur Aufnahme des unteren Deckelrandes (13) versehen ist.

2. Spritzgegossener Einrand-Kunststoffbehälter nach Anspruch 1, **dadurch gekennzeichnet,** daß die einwärts gerichteten Vorsprünge (17) eine Fläche umschließen, die mindestens der Bodenaufstandsfläche des Kunststoffbehälters (1) entspricht.

3. Spritzgegossener Einrand-Kunststoffbehälter nach Anspruch 1 oder 2, **dadurch gekennzeichnet,** daß die Abstände zwischen den Vorsprüngen (17) deren Breite entsprechen und die Deckelunterseite mit nach außen weisenden Vorsprüngen versehen ist, deren Form den Vorsprüngen (17) auf der Innenseite des Deckels entspricht.

4. Spritzgegossener Einrand-Kunststoffbehälter nach Anspruch 3, **dadurch gekennzeichnet,** daß die auf der Deckelunterseite befindlichen Vorsprünge eine Fläche einschließen, die der innere obere Deckelrand (18) einschließt.

5. Spritzgegossener Einrand-Kunststoffbehälter nach einem der Ansprüche 1 bis 4, **dadurch gekennzeichnet,** daß die Deckelinnenseite (15) auf ihrer Unterseite mit einer hervorspringenden umlaufenden Stützkante (19) zur Aufnahme des inneren oberen Deckelrandes (18) eines weiteren Deckels versehen ist.

6. Spritzgegossener Einrand-Kunststoffbehälter nach den Ansprüchen 1 bis 5, **dadurch gekennzeichnet,** daß die Tiefe der Einschnürung (12) etwa der Dicke des unteren Deckelrandes (13) entspricht.

7. Spritzgegossener Einrand-Kunststoffbehälter nach Anspruch 6, **dadurch gekennzeichnet,** daß die Höhe der Einschnürung (12) wesentlich größer ist als die Dicke des unteren Deckelrandes (13).

8. Spritzgegossener Einrand-Kunststoffbehälter nach Anspruch 6 oder 7, **dadurch gekennzeichnet,** daß der untere Deckelrand (13) auf der Oberseite der Einschnürung (12) unter Vorspannung aufliegt.

9. Spritzgegossener Einrand-Kunststoffbehälter nach Anspruch 1, **dadurch gekennzeichnet,** daß die Abgleitschräge (10) mit einem umlaufenden, nach außen weisenden, nasenförmigen Vorsprung (20) versehen ist.

## Claims

1. Injection-moulded single-edged plastics container (1) with a lid (2) which can lock into place, and with an upper edge (3) for accommodating the lid (2) in a locking manner, and a peripheral edge (8) which is located on and projects from the outer side of the container wall (4) and merges into a downwardly drawn edge region (9) which surrounds the wall (4) at a spacing, the lid (2) comprising an approximately perpendicular outer region which, in the locked-in state, surrounds the wall (4) above the projecting edge (8) and comprises an outwardly directed slide-off slope (10), and being provided with an inner surface (14) which, in the locked-in state of the lid (2), is located below the upper edge (3) of the plastics container (1), characterized in that the lid interior (15) surrounding the lid inner surface (14) is provided with a peripheral reinforcing bead (16); in that the reinforcing bead (16) comprises a plurality of inwardly directed, cuboid projections (17) which connect the inner surface (14) to the lid interior (15); and in that the downwardly drawn edge region (9) is provided with a peripheral constriction (12) for accommodating the lower lid edge (13).

2. Injection-moulded single-edged plastics container according to Claim 1, characterized in that the inwardly directed projections (17) enclose an area which corresponds at least to the base standing area of the plastics container (1).

3. Injection-moulded single-edged plastics container according to Claim 1 or 2, characterized in that the spacings between the projections (17) correspond to the widths thereof, and the lid underside is provided with outwardly directed projections whose shape corresponds to the projections (17) on the inner side of the lid.

4. Injection-moulded single-edged plastics container according to Claim 3, characterized in that the projections on the lid underside enclose an area which encloses the inner upper lid edge (18).

5. Injection-moulded single-edged plastics container according to any one of Claims 1 to 4, characterized in that the lid interior (15) is provided on its underside with a projecting peripheral support edge (19) for accommodating the inner upper lid edge (18) of a further lid.

6. Injection-moulded single-edged plastics container according to any one of Claims 1 to 5, characterized in that the depth of the constriction (12) corresponds approximately to the thickness of the lower lid edge (13).

7. Injection-moulded single-edged plastics container according to Claim 6, characterized in that the height of the constriction (12) is substantially greater than the thickness of the lower lid edge (13).

8. Injection-moulded single-edged plastics container according to Claim 6 or 7, characterized in that the lower lid edge (13) rests on the upper side of the constriction (12) under pretension.

9. Injection-moulded single-edged plastics container according to Claim 1, characterized in that the slide-off slope (10) is provided with a peripheral outwardly directed nose-like projection (20).

## Revendications

1. Récipient (1) en matière plastique moulé par injection à bord unique, muni d'un couvercle encliquetable (2) et comportant un bord supérieur (3) destiné à recevoir par encliquetage le couvercle (2) et un rebord périphérique saillant (8), qui se trouve sur la face extérieure de sa paroi (4) et qui se prolonge par une partie de rebord (9) repliée vers le bas et entourant à distance la paroi (4), le couvercle (2) comportant une partie extérieure disposée à peu près verticalement, qui, dans l'état encliqueté, entoure la paroi (4) au-dessus du rebord saillant (8) et qui comporte un chanfrein de glissement (10) tourné vers l'extérieur, et étant pourvu d'une surface intérieure (14) qui, dans l'état encliqueté du couvercle (2), se trouve en dessous du bord supérieur (3) du récipient (1) en matière plastique, caractérisé
en ce que la face intérieure (15) du couvercle, qui entoure la surface intérieure (14) du couvercle, est pourvue d'une moulure périphérique de renforcement (16),
en ce que la moulure de renforcement (16) comporte une multiplicité de salles (17) de forme rectangulaire, dirigées vers l'intérieur, qui relient la surface intérieure (14) à la face intérieure (15) du couvercle, et
en ce que la partie de rebord (9) repliée vers le bas est pourvue d'une gorge périphérique (12) destinée à recevoir le bord inférieur (13) du couvercle.

2. Récipient en matière plastique moulé par injection à bord unique selon la revendication 1, caractérisé en ce que les saillies (17) dirigées vers l'intérieur entourent une surface qui correspond au moins à la surface d'appui au sol du récipient en matière plastique (1).

3. Récipient en matière plastique moulé par injection à bord unique selon la revendication 1 ou 2, caractérisé en ce que les intervalles entre les saillies (17) correspondent à la largeur de ces dernières et la face inférieure du couvercle est pourvue de saillies orientées vers l'extérieur, dont la forme correspond à celle des saillies (17) présentes sur la face intérieure du couvercle.

4. Récipient en matière plastique moulé par injection à bord unique selon la revendication 3, caractérisé en ce que les saillies se trouvant sur la face inférieure du couvercle ont pour enveloppe une surface qu'encercle le bord supérieur intérieur (18) du couvercle.

5. Récipient en matière plastique moulé par injection à bord unique selon l'une des revendications 1 à 4, caractérisé en ce que la face intérieure (15) du couvercle est pourvue, sur son côté inférieur, d'une arête saillante périphérique d'appui (19) destinée à recevoir le bord supérieur intérieur (18) d'un autre couvercle.

6. Récipient en matière plastique moulé par injection à bord unique selon les revendications 1 à 5, caractérisé en ce que la profondeur de la gorge (12) correspond à peu près à l'épaisseur du bord inférieur (13) du couvercle.

7. Récipient en matière plastique moulé par injection à bord unique selon la revendication 6, caractérisé en ce que la hauteur de la gorge (12) est nettement plus grande que l'épaisseur du bord inférieur (13) du couvercle.

8. Récipient en matière plastique moulé par injection à bord unique selon la revendication 6 ou 7, caractérisé en ce que le bord inférieur (13) du couvercle s'applique, en étant précontraint, sur le côté supérieur de la gorge (12).

9. Récipient en matière plastique moulé par injection à bord unique selon la revendication 1, caractérisé en ce que le chanfrein de glissement (10) est pourvu d'une saillie périphérique (20) en forme de bec, orientée vers l'extérieur.
